# NEW EUROPEAN PATENT SPECIFICATION

(11) **EP 0 437 028 B2**
(45) Date of publication and mention of the opposition decision: **24.06.1998**
(45) Mention of the grant of the patent: 23.09.1992
(21) Application number: 90312207.5
(22) Date of filing: 08.11.1990
(51) Int. Cl.: B01J 8/00, B01D 45/08, F23J 3/04

(54) **Impact type particle separator**
Teilchenabscheider nach dem Aufprallprinzip
Séparateur de particules par impact

(30) Priority: 08.01.1990 US 461707
(43) Date of publication of application: 17.07.1991
(73) Proprietor: THE BABCOCK & WILCOX COMPANY, New Orleans, Louisiana 70160 (US)
(72) Inventor: Belin, Felix, Brecksville, Ohio 44141 (US); James, David Eric, Barberton, Ohio 44203 (US); Walker, David Judson, Wadsworth, Ohio 44281 (US)
(74) Representative: Purvis, William Michael Cameron

(56) References cited:
- EP-A- 0 346 062
- DE-A- 3 640 377
- US-A- 4 532 871
- US-A- 4 538 549
- US-A- 4 891 052
- National Board Bulletin, vol. 45, No.9, pages 6-10

## Description

The invention pertains to an impact-type particle separator.

Such a particle separator can be used with a circulating fluidized bed combustor and may be positioned within the freeboard space just upstream of a combustor exit.

The use of impact-type particle separators to remove solid material entrained in a gas is well known. Typical examples of such particle separators are illustrated in Patent Specifications US-A-2 083 764 to Weisgerber, US-A-2 163 600 to How, US-A-3 759 014 to Von Dyken, II et al., US-A-4 253 425 to Gamble et al., and US-A-4 717 404 to Fore.

With respect to fluidized bed combustors, particle separators can be categorized as being either external or internal. External type particle separators are those located outside the furnace enclosure with typical examples being illustrated in Patent Specifications US-A-4 640 201 and 4 679 511 to Holmes et al., US-A-4 672 918 to Engstrom et al., and US-A-4 683 840 to Morin. Internal type particle separators are those located within the furnace enclosure and are illustrated in Patent Specification US-A-4 532 871 and 4 589 352 to Van Gasselt et al., US-A-4 699 068, 4 708 092 and 4 732 113 to Engstrom, and US-A-4 730 563 to Thornblad.

The EP-A 346 062 describes an impact separator disposed in a fluidized bed reactor. The separator comprises a plurality of U-shaped beams arranged in three rows. The beams are disposed in and partly just downstream of the exit opening of the furnace section and each beam terminates in a through which is formed by two adjacent wall separating the furnace section from the heat recovery section

Such internal type separators either involve baffles across the entire freeboard space that would be difficult to unclog and support or they involve an internal baffle and chute arrangement which closely resembles the external type of particle separators.

According to the invention there is provided an internal impact type particle separator disposed in a circulating fluidized bed combustor which separator comprises a plurality of concave impingement members supported within a furnace enclosure, the impingement members extending uniformly in at least two staggered rows fully across and just upstream of a furnace exit opening, the impingement members also extending along the length of the exit opening and terminating at a location below the lower elevation of the exit opening so that the collected particles can fall unobstructed and unchannelled directly underneath the impingement members and along one wall of the furnace enclosure to be re-entrained and recycled, the staggered rows being spaced from each other a distance of at least 50% of the distance between adjacent ones of the impingement members with one of the rows being spaced from said one furnace wall a distance less than the depth of each of the impingement member; and a baffle attached to the lower end region of the impingement members below the lower elevation of the furnace exit opening with the baffle obstructing the passage of gas between the impingement members.

Such a particle separator can be located within the furnace enclosure without creating an obstruction in the furnace freeboard. It need require no re-configuration of the furnace enclosure or chutes for the collected particles and can increase average density of the fluidized bed of the furnace as well as solids residence time. Such increases enhance furnace heat transfer rates and improve the carbon conversion effciency. Additionally, improved sorbent utilization can occur for greater sulphur capture without increasing external solids circulation rate.

The invention is diagrammatically illustrated by way of example in the accompanying drawings, in which:-
Figure 1a is a schematic side view illustrating a portion of a circulating fluidized bed combustor provided with an internal impact type particle separator;
Figure 1b is a schematic plan view corresponding to Figure 1a;
Figure 2a is a schematic side view similar to Figure 1 but further depicting a downstream external-type particle separator;
Figure 2b is a schematic plan view corresponding to Figure 2a.
Figure 3 is as a schematic side view similar to Figure 1 but further depicting a downstream convection heating surface;
Figure 4 is a schematic plan view illustrating impingement members of the particle separators of Figures 1 to 3 and their location within the furnace enclosure;
Figure 5 is a schematic side view illustrating an internal impact type particle separator according to the invention including a horizontal baffle plate;
Figure 6 is a schematic side view illustrating an internal impact type particle separator according to the invention including an angled baffle plate; and
Figure 7 is a schematic side view of a funnelled impingement member of an internal impact type particle separator according to the invention.

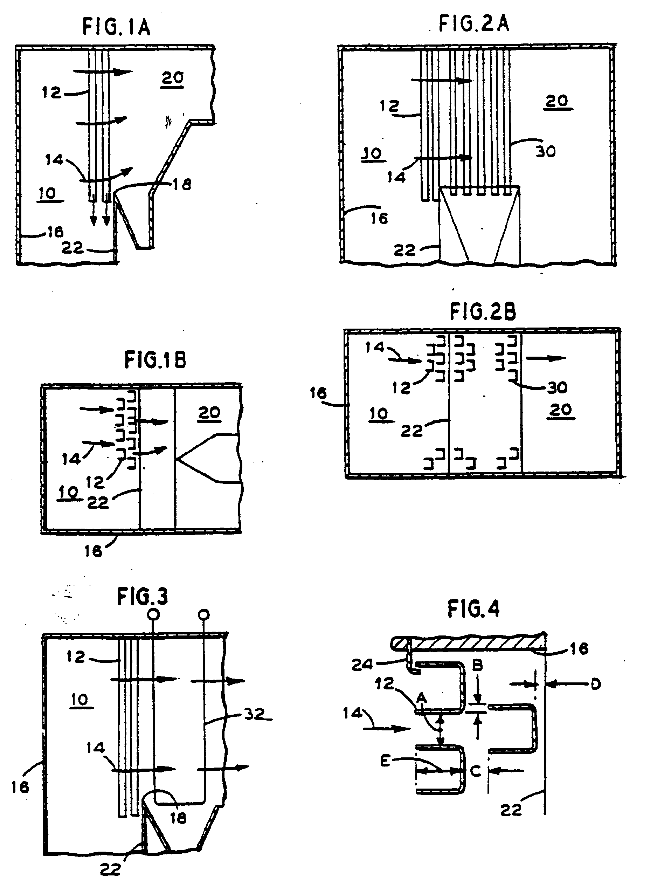

Referring initially to Figures 1, 2 and 3, which show a portion of a circulating fluidized bed combustor 10, the combustor 10 is outfitted with two or more rows of impingement members 12 supported from a roof or ceiling of the combustor 10. These impingement members 12 may be used as a first stage separator followed by a flue gas pass 20 connecting it with other separators or heat surfaces as in Figure 1, with other downstream impingement members 30 as in Figure 2, or in conjunction with convection heating surface 32 in the downstream pass as in Figure 3.

In any event, the impingement members 12 are non-planar, they may be U-shaped, E-shaped, W-shaped or any other shape as long as they have a concave surface. Alternate rows of the members 12 are staggered such that flue gas 14 passes through them enabling the entrained solid particles to strike the concave surfaces. Subsequently, the particles thus collected will free fall downward against the crossing flow of the flue gas 14.

The impingement members 12 are positioned within a furnace enclosure 16 fully across and just upstream of a furnace exit opening 18. The exit opening 18 encompasses not less than 70% of the width of the combustor wall, and ideally, the exit opening 18 extends all the way across its width with the impingement members 12 doing the same. Besides covering the exit opening 18, each of the impingement members 12 also extends beyond the lower elevation of the exit opening 18 by approximately 305mm (one foot). In this fashion, as the flue gas 14 exits the furnace enclosure 16, it must first pass through the impingement members 12 as shown just upstream of the exit opening 18. Preferably, the flue gas pass 20 downstream of the exit opening 18 is arranged so that no substantial change in the flow direction of the flue gas 14 occurs nor is there a reduction in size of the flue gas pass 20 immediately downstream of the exit opening 18. In the preferred embodiment, no such duct size or direction change is made within the distance from the exit opening 18 equal to: (1) if measured vertically, 25% of the length of the impingement members 12, or, (2) if measured horizontally, 25% of the width of the exit opening 18.

Referring now more specifically to Figure 4, the spacing of each of the impingement members 12 within the furnace enclosure 16 is shown. Reference 'A' is the spacing between adjacent ones of the members 12. Reference 'B' is the overlap of one member 12 in a row over the spacing 'A' in the adjacent row. Generally 'B' is from 5% to 15% of the spacing 'A'. Reference 'C' is the distance between adjacent rows with this value generally being from 50% to 75% of the spacing 'A'. Reference 'D' is the gap between the back row and a furnace rear wall 22. Gap 'D' is usually 15% or less of the concavity of the impingement member 12 so as to reduce by-passing. This concavity is referred to as distance 'E'.

L-shaped baffles 24 are secured to the furnace enclosure 16 adjacent the end of each row of the impingement members 12. Each baffle 24 extends along the length of its respective member 12 to prevent flue gas 14 from by-passing the members 12 along the furnace enclosure 16.

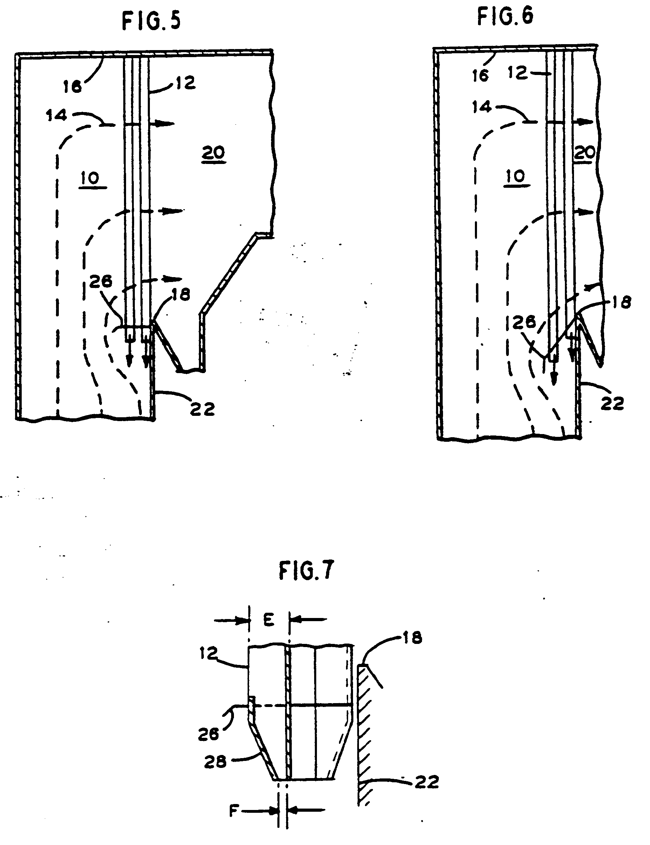

As illustrated in Figures 5, 6 and 7, a baffle 26 is added near the bottom of the impingement members 12. The baffle 26 is positioned below the lower elevation of the exit opening 18 and it may either be horizontal (Figure 5) or angled downward from the opening 18 (Figure 6). In either case, the baffle 26 causes the flue gas 14 to flow across the impingement members 12 as shown thereby preventing any of it from flowing directly upward along the impingement members 12 and into the flue gas pass 20.

Of course, the collected particles are allowed to continue to flow downward along the impingement members 12 and through small openings in the baffle 26. In this fashion and in view of the new flow path of the flue gas 14, the recycled particles that flow downward along the furnace wall 22 will meet with less reentrainment from the upwardly flowing flue gas 14.

So as not to allow gas short-cutting, the baffle 26 is configured to cover the flow area between the individual inpingement members 12 but not the concave area within each of the individual members 12. Also, the angled or inclined baffle 26 prevents any solids from accumulating on it.

Preferably the end of each impingement member 12 is between 102 and 305mm (4 and 12 inches) below the baffle 26, and the baffle 26 is preferably flanged at its periphery for greater rigidity. Also, a gap between the baffle 26 and adjacent walls is preferably not more than 6.4mm (1/4 inch)

Figure 7 illustrates an impingement member 12 having a funnelled end 28 that provides for even less of an opening through which upwardly flowing flue gas 14 may travel. Another function of the funnelled end 28 is to divert the separated solids away from the furnace wall 22 to avoid local wall erosion near the discharge. The opening "F" of the funnelled end 28 is preferably one half of "E" but in any event, not less than 63.5mm (2.5 inches).

In the preferred embodiment, the length, width, number, configuration and spacing of the impingement members 12 are selected for a flue gas 14 velocity across the impingement members of preferably 6 to 8 meters per second but not greater than 10 meters per second for the embodiment without the baffle 26 and not greater than 13 meters per second for the embodiment with the baffle 26. These numbers were determined from testing various U-beam type internal impingement separators using a wide range of gas velocities. Generally, lower flue gas velocity in the separator correlates to higher collection efficiency but requires longer impingement members 12. A value of 6 to 8 meters per second was found to minimize particle entrainment by the flue gas 14 while permitting an acceptable length of impingement members 12 for commercial size combustors.

During operation, the members 12 discharge their collected solids along the bottom of each member. The discharged solids then free-fall along the adjacent furnace wall 22 directly back to the lower part of the fluidized bed thereby increasing the bed average density and particle residence time. No additional channelling or baffling or other obstruction in the furnace freeboard is required to return these particles back to the bed.

In a test of the embodiment without the baffle plates, it was found that one row of the impingement members 12 doubles the average bed density while two such rows nearly quadruples the density. Thus, it is recommended that there be at least two rows of impingement members 12. Also, tests have shown that the inclusion of the baffle 26 increased the bed density about three times over the same arrangement without the baffle 26. This enhanced density increases the average heat transfer rate which corresponds to a reduction of the heat transfer surface requirements and its associated cost. Additionally, higher bed densities increase the particle residence time in the bed thereby improving the carbon conversion efficiency and the sorbent utilization for sulphur capture. It also promotes a higher temperature uniformity in the combustor 10 while permitting optimal temperatures for sulphur capture reactions to be maintained throughout the combustor.

Another advantage of the rows of the impingement members 12 installed internally in the combustor 10 upstream of a secondary separator is that for a given average furnace density they reduce the carryover of coarser bed particles to the flue gas pass 20. This reduces the potential for tube erosion in the pass 20 and allows for increased concentrations of fine char and sorbent particles to be collected by external or secondary particle collectors which are then recycled back to the combustor.

## Claims

1. An internal impact type particle separator disposed in a circulating fluidized bed combustor 10) which separator comprises a plurality of concave impingement members (12) supported within a furnace enclosure (16) the impingement members (12) extending uniformly in at least two staggered rows fully across and just upstream of a furnace exit opening; (18), the impingement members (12) also extending along the length of the exit opening (18) and terminating at a location below the lower elevation of the exit opening (18) so that the collected particles can fall unobstructed and unchannelled directly underneath the impingement members (12) and along one wall (22) of the furnace enclosure (16) to be re-entrained and recycled, the staggered rows being spaced from each other a distance of at least 50% of the distance between adjacent ones of the impingement members (12) with one of the rows being spaced from said one furnace wall (22) a distance less than the depth (E) of each of the impingement member (12); and a baffle (26) attached to the lower end region of the impingement members (12) below the lower elevation of the furnace exit opening (8) with the baffle (26) obstructing the vertical passage of gas between the impingement members (12).

2. An internal impact type particle separator according to Claim 1, wherein the impingement members (12) in one of the rows overlap the impingement members (12) of an adjacent one of the rows a distance (B) of from 5% to 15% of the spacing (A) between adjacent ones of the members (12) in said one row.

3. An internal impact type particle separator according to Claim 1 or Claim 2, wherein the staggered rows are spaced from each other a distance of from 50% to 70% of the spacing (A) between adjacent ones of the impingement members (12) in said one row.

4. An internal impact type particle separator according to any one of Claims 1 to 3, wherein the distance between said one wall (22) of the furnace enclosure (16) and an adjacent one of the rows of the members (12) is less than 15% of the depth (E) of the members (12).

5. An internal impact type particle separator according to any one of Claims 1 to 4, wherein a gas pass (20) downstream of the exit opening (18) is configured so that: (1) no vertical change in flue direction or flue gas pass (20) size occurs within a distance from the exit opening (18) equal to 25% of the length of the said impingement members (12); and, (2) no horizontal change in flue gas (14) flow direction or flue gas pass (20) size occurs within a distance from the exit opening (18) equal to 25% of the width of the exit opening.

6. An internal impact type particle separator according to Claim 5, including an elongate L-baffle (24) secured on opposite side walls of the enclosure (16) adjacent the ends of each of the rows to prevent flue gas bypassing along the walls of the furnace enclosure (16).

7. An internal impact type particle separator according to any one of Claims 1 to 6, wherein the impingement members (12) extend below the lower elevation of the exit opening (18) by approximately 305mm (one foot).

8. An internal impact type particle separator according to Claim 1, wherein the baffle (26) is horizontal.

9. An internal impact type particle separator according to Claim 1, wherein the baffle (26) is angled with respect to the impingement members (12).

10. An internal impact type particle separator according to Claim 1, wherein the baffle (26) is spaced not more than 6.4mm (1/4 inch) from the furnace enclosure (16) to prevent flue gas (14) bypassing.

11. An internal impact type particle separator according to Claim 1, wherein the baffle (26) is located between 102 and 305mm (4 and 12 inches) from the lower end of the impingement members (12).

12. An internal impact type particle separator according to Claim 11, wherein the discharge end of each of the impingement members underneath the baffle (26) is funnel-shaped (28).

13. An internal impact type particle separator according to any one of Claims 1 to 7, wherein the furnace exit opening width (18) encompasses not less than 70% of the width of said one wall (22) of the furnace enclosure (16).

14. An internal impact type particle separator according to any one of Claims 1 to 7, wherein the impingement members (12) are U-shaped, E-shaped, W-shaped or of some other similar concave configuration.

## Patentansprüche

1. Teilcheninnenabscheider nach dem Aufprallprinzip, der in einer Verbrennungseinrichtung (10) mit zirkulierender Wirbelschicht angeordnet ist und eine Vielzahl von konkaven Aufprallgliedern (12), die innerhalb eines Ofengehäuses (16) gehaltert sind und sich gleichmäßig in mindestens zwei versetzten Reihen direkt aufstromig von einer Ofenausgangsöffnung (18) und vollständig quer über diese erstrecken, wobei sich die Aufprallglieder (12) auch längs der Länge der Ausgangsöffnung (18) erstrecken und an einer Stelle unter der unteren Höhe der Ausgangsöffnung (18) derart enden, daß die gesammelten Teilchen ungehindert und in freier Bahn direkt unter die Aufprallglieder (12) und entlang einer Wand (22) des Ofengehäuses (16) fallen können, um wieder eingefangen und rezykliert zu werden, wobei die versetzten Reihen in einem Abstand von mindestens 50 % des Abstandes zwischen benachbarten Aufprallgliedern (12) voneinander angeordnet sind, wobei eine der Reihen von der Ofenwand (22) in einem Abstand angeordnet ist, der kleiner ist als die Tiefe (E) jedes Aufprallgliedes (12), und eine Prallfläche (26) aufweist, die am unteren Endbereich der Aufprallglieder (12) unter der unteren Höhe der Ofenausgangsöffnung (8) angeordnet ist, wobei die Prallfläche (26) den vertikalen Durchgang des Gases zwischen den Aufprallgliedern (12) hindert.

2. Teilcheninnenabscheider nach dem Aufprallprinzip nach Anspruch 1, wobei die Aufprallglieder (12) in einer Reihe die Aufprallglieder (12) einer benachbarten Reihe um einen Abstand (B) von 5 bis 15 % des Abstandes (A) zwischen benachbarten Gliedern (12) dieser einen Reihe überlappen.

3. Teilcheninnenabscheider nach dem Aufprallprinzip nach Anspruch 1 oder 2, wobei die versetzten Reihen um einen Abstand von 50 bis 70 % des Abstandes (A) zwischen benachbarten Aufprallgliedern (12) der besagten Reihe voneinander im Abstand angeordnet sind.

4. Teilcheninnenabscheider nach dem Aufprallprinzip nach einem der Ansprüche 1 bis 3, wobei der Abstand zwischen der einen Wand (22) des Ofengehäuses (16) und einer benachbarten Reihe der Glieder (12) kleiner ist als 15 % der Tiefe (E) der Glieder (12).

5. Teilcheninnenabscheider nach dem Aufprallprinzip nach einem der Ansprüche 1 bis 4, wobei ein Gasdurchgang (20) abstromig von der Ausgangsöffnung (18) so gestaltet ist, daß
1. innerhalb eines Abstandes von der Ausgangsöffnung (18) gleich 25 % der Länge der Aufprallglieder (12) keine vertikale Strömungsrichtungsänderung des Rauchgases oder der Abmessung des Rauchgasdurchganges (20) auftritt und
2. keine horizontale Änderung der Strömungsrichtung des Rauchgages (14) oder der Abmessung des Rauchgasdurchganges (20) innerhalb eines Abstandes von der Ausgangsöffnung (18) auftritt, der gleich 25 % der Breite der Ausgangsöffnung ist.

6. Teilcheninnenabscheider nach dem Aufprallprinzip nach Anspruch 5 mit einer länglichen L-Prallfläche (24), die an gegenüberliegenden Seitenwänden des Gehäuses (16) neben den Enden jeder Reihe angebracht ist, um das Rauchgas daran zu hindern, längs der Wände des Ofengehäuses (16) als Umgehung vorbeizuströmen.

7. Teilcheninnenabscheider nach dem Aufprallprinzip nach einem der Ansprüche 1 bis 6, wobei sich die Aufprallglieder (12) unter die untere Höhe der Ausgangsöffnung (18) um etwa 305 mm (1 Fuß) erstrecken.

8. Teilcheninnenabscheider nach dem Aufprallprinzip nach Anspruch 1, wobei die Prallfläche (26) horizontal ist.

9. Teilcheninnenabscheider nach dem Aufprallprinzip nach Anspruch 1, wobei die Prallfläche (26) bezüglich der Aufprallglieder (12) unter einem Winkel angestellt ist.

10. Teilcheninnenabscheider nach dem Aufprallprinzip nach Anspruch 1, wobei die Prallfläche (26) nicht mehr als 6,4 mm (1/4 Zoll) von dem Ofengehäuse (16) im Abstand angeordnet ist, um Rauchgas (14) an der Umgehung zu hindern.

11. Teilcheninnenabscheider nach dem Aufprallprinzip nach Anspruch 1, wobei die Prallfläche (26) zwischen 102 und 305 mm (4 und 12 Zoll) vom unteren Ende der Aufprallglieder (12) angeordnet ist.

12. Teilcheninnenabscheider nach dem Aufprallprinzip nach Anspruch 11, wobei das Abströmende jedes Aufprallgliedes unter der Prallfläche (26) trichterförmig gestaltet (28) ist.

13. Teilcheninnenabscheider nach dem Aufprallprinzip nach einem der Ansprüche 1 bis 7, wobei die Breite der Ofenausgangsöffnung (18) nicht weniger als 70 % der Breite der Wand (22) des Ofengehäuses (16) einschließt.

14. Teilcheninnenabscheider nach dem Aufprallprinzip nach einem der Ansprüche 1 bis 7, wobei die Aufprallglieder (12) U-förmig, E-förmig, W-förmig sind oder eine andere ähnliche konkave Gestalt haben.

## Revendications

1. Séparateur de particules interne du type à impact disposé dans un brûleur à lit fluidisé circulant (10), lequel séparateur comprend une pluralité d'élément de collision concaves (12) supportés dans une enceinte de four (16), les éléments de collision (12) s'étendant uniformément en au moins deux rangées décalées complètement en travers et juste en amont d'une ouverture de sortie de four (18), les éléments de collision (12) s'étendant également le long de l'ouverture de sortie (18) et se terminant en un emplacement en dessous du niveau le plus bas de l'ouverture de sortie (18) de manière que les particules recueillies puissent tomber sans être gênées ni canalisées directement sous les éléments de collision (12) et le long d'une paroi (22) de l'enceinte du four( 16) pour être ré-entraînées et recyclées, les rangées décalées étant espacées l'une de l'autre d'une distance égale à 50 % au moins de la distance entre des éléments adjacents des éléments de collision (12) avec une des rangées étant espacée de ladite paroi de four (22) d'une distance inférieure à la profondeur (E) de chaque élément de collision (12) et une chicane (26) fixée à la région d'extrémité inférieure des éléments de collision (12) au-dessous du niveau le plus bas de l'ouverture de sortie (18) du four avec la chicane (26) obstruant le passage vertical de gaz entre les éléments de collision (12).

2. Séparateur de particules interne du type à impact selon la revendication 1, dans lequel les éléments de collision (12) dans une des rangées chevauchent les éléments de collision (12) d'une rangée adjacente sur une distance (B) représentant 5 à 15 % de l'espace (A) entre des éléments adjacents des éléments (12) dans ladite rangée.

3. Séparateur de particules interne du type à impact selon la revendication 1 ou 2, dans lequel les rangées décalées sont espacées l'une de l'autre d'une distance représentant 50 à 70 % de l'espace (A) entre des éléments adjacents des éléments de collision (12) dans ladite rangée.

4. Séparateur de particules interne du type à impact selon l'une quelconque des revendications 1 à 3, dans lequel la distance entre ladite paroi (22) de l'enceinte du four (16) et une rangée adjacente des rangées d'éléments (12) est inférieure à 15 % de la profondeur (E) des éléments (12).

5. Séparateur de particules interne du type à impact selon l'une quelconque des revendications 1 à 4, dans lequel un passage de gaz (20) en aval de l'ouverture de sortie (18) est configuré de manière que : (1) aucun changement vertical de direction du gaz de fumée ou de la taille du passage de gaz de fumée (20) ne se produise sur une distance depuis l'ouverture de sortie (18) égale à 25 % de la longueur desdits éléments de collision (12); et (2) aucun changement horizontal de direction du gaz de fumée (14) ou de la taille du passage de gaz de fumée (20) ne se produise sur une distance depuis l'ouverture de sortie (18) égale à 25 % de la largeur de l'ouverture de sortie.

6. Séparateur de particules interne du type à impact selon la revendication 5, comprenant une chicane allongée en forme de L (24) fixée sur les parois latérales opposées de l'enceinte (16), adjacente aux extrémités de chacune des rangées pour empêcher le gaz de fumée d'être dévié le long des parois de l'enceinte du four (16).

7. Séparateur de particules interne du type à impact selon l'une quelconque des revendications 1 à 6, dans lequel les éléments de collision (12) s'étendent au-dessous du niveau le plus bas de l'ouverture de sortie (18) sur 305 mm environ (un pied).

8. Séparateur de particules interne du type à impact selon la revendication 1, dans lequel la chicane (26) est horizontale.

9. Séparateur de particules interne du type à impact selon la revendication 1, dans lequel la chicane (26) forme un angle par rapport aux éléments de collision (12).

10. Séparateur de particules interne du type à impact selon la revendication 1, dans lequel la chicane (26) est espacée de 6,4 mm (1/4 de pouce) au plus de l'enceinte du four (16) pour empêcher le gaz de fumée (14) d'être dévié.

11. Séparateur de particules interne du type à impact selon la revendication 1, dans lequel la chicane (26) est située à une distance comprise entre 102 et 305 mm (4 et 12 pouces) depuis l'extrémité inférieure des éléments de collision (12).

12. Séparateur de particules interne du type à impact selon la revendication 11, dans lequel l'extrémité de décharge de chacun des éléments de collision sous la chicane (26) a la forme d'un entonnoir (28).

13. Séparateur de particules interne du type à impact selon l'une quelconque des revendications 1 à 7, dans lequel la largeur de l'ouverture de sortie (18) du four comprend au moins 70 % de la largeur de ladite paroi (22) de l'enceinte du four (16).

14. Séparateur de particules interne du type à impact selon l'une quelconque des revendications 1 à 7, dans lequel les éléments de collision (12) ont la forme d'un U, d'un E, d'un W ou une autre configuration concave similaire.
